# EUROPEAN PATENT SPECIFICATION

(11) **EP 0 279 667 B1**
(45) Date of publication and mention of the grant of the patent: **20.09.1995**
(21) Application number: 88301358.3
(22) Date of filing: 18.02.1988
(51) Int. Cl.: B01D 53/52, B01D 53/62, B01D 53/14, C01B 17/05

(54) **Process for the removal of hydrogen sulfide and optionally carbon dioxide from gaseous streams**
Verfahren zur Entfernung von Schwefelwasserstoff und gegebenenfalls Kohlendioxid aus Gasströmen
Procédé pour la séparation d'acide sulfhydrique et éventuellement de dioxyde de carbone de courants gazeux

(30) Priority: 19.02.1987 US 16167; 19.02.1987 US 16169
(43) Date of publication of application: 24.08.1988
(73) Proprietor: THE DOW CHEMICAL COMPANY, Midland Michigan 48640-1967 (US)
(72) Inventor: Jeffrey, Gaines C., Houston Texas 77005 (US)
(74) Representative: Burford, Anthony Frederick

(56) References cited:
- EP-A- 0 186 235
- EP-A- 0 212 730
- EP-A- 0 215 505
- EP-A- 0 244 249
- GB-A- 999 800
- GB-A- 2 013 099
- GB-A- 2 192 347
- US-A- 4 091 073
- US-A- 4 409 199
- US-A- 4 532 118

## Description

The present invention concerns the removal of hydrogen sulfide and optionally carbon dioxide from gaseous streams utilizing an H₂S-selective absorbent and optionally a CO₂-selective absorbent in admixture with an aqueous alkaline solution containing a chelated polyvalent metal.

In US-A-4,091,073, the use of an absorbent for carbon dioxide, and preferably for hydrogen sulfide as well, is taught in a process for removal of hydrogen sulfide from gaseous streams by contact with a polyvalent metal chelate. The use of carbon dioxide absorbents in a process for the removal of hydrogen sulfide from a gaseous stream is also taught in US-A-4,518,576 and 4,368,178.

The removal of hydrogen sulfide and carbon dioxide from sour gaseous streams is disclosed in US-A-4,402,930 by scrubbing the gaseous streams with an aqueous solution containing a carbon dioxide absorbent and a polyvalent metal chelate in a higher valence state and oxidizing said chelate in a regeneration zone.

One of the main disadvantages of the processes for removing hydrogen sulfide from gaseous streams utilizing polyvalent metal chelates is the instability of the chelating agent under the process conditions. In order to overcome the instability of the chelating agents, particularly those complexed with polyvalent metal ions such as iron, the prior art has taught the use of mixtures of certain chelating agents. It is known in the prior art that iron in the ferric state acts as a catalyst for the oxidation of ethylenediamine tetraacetic acid in aqueous solutions from Motekaitis, et al. Canadian Journal of Chemistry, Volume 58, No. 19, October 1, 1980. In US-A-4,421,733 and 4,455,287, methods are disclosed for reducing the instability of polyvalent metal chelating agents under the reaction conditions in which these agents are utilized to remove hydrogen sulfide from gaseous streams. In US-A-, the use of a stabilizing amount of bisulfite ion is suggested and in US-A-4,455,287, the use of a biocide is suggested as a means of stabilizing a polyvalent metal chelate for use in the removal of hydrogen sulfide gas from a fluid stream. In US-A-3,068,065 there is disclosed a process for the removal of hydrogen sulfide from gaseous streams by washing the gas stream with a solution containing an iron chelate wherein the iron is present in the chelate in the ferric state.

GB-A-999,800 (issued July 28, 1965 to Humphreys and Glasgow Ltd.) teaches the benefit of employing a high proportion of a polyvalent metal chelate in the reduced valence state in conjunction with a polyvalent metal chelate in the oxidized or higher valence state, to reduce degradation of the chelating agent in a process for the removal of hydrogen sulfide from a gas. The gaseous stream is contacted with an aqueous solution containing iron complexed with an amino polycarboxylic acid in which the iron is a mixture of the higher and lower valence state. The hydrogen sulfide gas is converted to sulfur by contact with the iron chelating agent in which the iron is present in the higher oxidation state. In turn, the iron is reduced to the lower oxidation state. Subsequently, the iron is converted from the lower oxidation state to the higher oxidation state in an oxidation zone and it is at this point, that, as the iron chelate is exposed to oxidation, there results a progressive loss of the chelating agent from the aqueous solution. Precipitation of insoluble iron compounds occurs as the result of the decomposition of the iron chelate. The British Patent teaches the controlled, oxidative regeneration of the iron chelate so as to prevent localized, intensive, oxidative decomposition of the chelating agent. Generally from 15 to 75 percent by weight of the total iron present in the iron chelate solution can be ferrous iron with the preferred proportion of ferrous iron chelate remaining in the solution after regeneration being between 20 and 50 percent by weight, based upon the total iron chelate present in said solution. Simple calculation will indicate that the ratio of ferrous to ferric iron chelate disclosed in the British Patent is, at the ratio of 50 percent ferrous iron, a mole ratio of 1. Similarly at a proportion of 75 percent by weight of ferrous iron, the mole ratio of ferrous to ferric iron chelate would be 75/25 =3. In contrast, the present invention indicates that the critical mole ratio of ferrous to ferric iron chelate is greater than 5.

EP-A-0186235 also discloses the use of a mixture of ferrous and ferric chelate in an aqueous scrubbing solution for removing hydrogen sulfide from sour gases. The maximum molar ratio of ferrous chelate to ferric chelate is 0.3, with the molar range 0.1 to 0.25 being preferred. The scrubbing solution can contain a selective absorbent for hydrogen sulfide and carbon dioxide and preferably has a pH in the range 6 to 7.5. The characterizing feature of the process of EP-A-0186235 is that the scrubbing solution is regenerated by contact with oxygen using a plug flow contacting procedure to maintain a presence of ferrous chelate in order to inhibit degradation of the ferric chelate.

EP-A-0244249 (priority date 1st May 1986; filing date 30th April 1987; published 4th November 1987) teaches contacting a sour gas stream with an aqueous alkaline scrubbing solution comprising an alkali and a polyvalent metal chelate, particularly an iron chelate, wherein all the polyvalent metal is present in the chelate as a lower valence state of the metal or as a mixture of higher and lower valence states wherein the amount in moles of said chelate present in the lower valence state is greater than 5 times the amount present of the higher valence polyvalent metal chelate. After hydrogen sulfide is absorbed by contacting the sour gas stream with the aqueous alkaline solution and converted to hydrosulfide and/or sulfide ions, some or all of these ions may be converted in the contact zone to elemental sulfur by reaction with any iron chelate which may be present in the higher valence state. The remainder of these ions are converted in an oxidation zone to elemental sulfur. The conversion is carried out in the oxidation zone by contact with an iron chelate present in a higher valence state only in at least an effective amount. No additional H₂S selective absorbent is used. This process suffers from reduced hydrogen sulfide absorption, as compared to most conventional processes in which hydrogen sulfide is converted directly to sulfur by a chelate present in the contact zone in the higher valence state. The remaining hydrogen sulfide is absorbed by the aqueous alkaline solution and subsequently converted to sulfur in an oxidation zone.

EP-A-0212730 (priority date 23rd August 1985; filing date 31st July 1986; publication date 4th March 1987) discloses a process for removing H₂S from a gaseous stream by employing a solubilized coordination complex of Fe(III) with nitrilotriacetic acid to oxidise the H₂S to solid sulphur in a contacting zone. The Fe(III) complex is present in an aqueous reactant solution which also contains a solubilized coordination complex of Fe(II) with nitrilotriacetic acid. The molar ratio of the Fe(III) complex to the Fe(II) complex in the reactant solution is from 0.2 to 6. EP-A-0212730 teaches that the stability of the reactants is temperature dependent, and, in particular, that the temperature of the reactant solution should be kept below the melting point of sulphur during the oxidation step. The sulphur is recovered by heating the mixture in an oxygen free environment to a temperature sufficient to melt the sulphur. This produces a two phase system, the upper phase comprising a solution of solubilized iron/nitrilotriacetic acid coordination complexes, and the lower phase comprising molten sulphur. The sulphur is then recovered by separating the two phases, and the reactant solution is regenerated and recycled to the contacting zone, the ratio of the Fe(III) to the Fe(II) coordination complex being from 0.2 to 6. No additional H₂S-selective absorbent is mentioned.

EP-A-0215505 (priority date 23rd August 1985, filing date 15th August 1986, publication date 25th March 1987) teaches that H₂S can be removed from a gaseous stream by employing an ammonium form of a coordination complex of Fe(III) with nitrilotriacetic acid to oxidise the H₂S to sulphur. The Fe(III) complex is present in an aqueous reactant solution which has a pH of between about 5 and about 8.5, and which also contains an ammonium form of a coordination complex of Fe(II) with nitrilotriacetic acid, and aqueous ammonia. The molar ratio of the Fe(III) complex to the Fe(II) complex in the reactant solution is from about 0.2 to about 6. EP-A-0215505 further teaches that degradation or decomposition of the polyvalent iron complexes can be prevented if the aqueous reactant solution contains 0.01 mol to 4 mol of thiosulphate ion per mol of iron. The process of EP-A-0215505 optionally comprises the steps of regenerating and recycling the reactant solution for further oxidation of H₂S. No additional H₂S-selective absorbent is mentioned.

A similar process, with a pH of 7-9 and a Fe³⁺ : Fe²⁺ ratio of 0,6 to 0,9, is disclosed in US-A-4532118. Again, no mention is made of an additional H₂S-selective absorbent.

In accordance with the present invention, it has now been found that hydrogen sulfide can be removed from a sour gaseous stream with improved efficiency, as compared to the process of GB-A-999,800, by contacting said stream with an H₂S-selective absorbent in admixture with an aqueous alkaline solution containing a polyvalent metal chelate. The polyvalent metal in the chelate is preferably iron. The process is a continuous process for the liquid phase oxidation of hydrogen sulfide to elemental sulfur without substantial oxidative degradation of the chelating agent. In one embodiment of the process of the invention, a polyvalent metal chelate is present in all or substantially all in the lower valence state of the metal in a contacting zone together with an aqueous alkaline solution. The hydrogen sulfide is partially absorbed by the H₂S-selective absorbent and partially converted to hydrosulfide and/or sulfide by the aqueous alkaline solution. In a second embodiment of the invention, a polyvalent metal chelate, when present in the contact zone in the higher valence state, is present in an amount at least equal to the stoichiometric amount required to convert the hydrogen sulfide present to sulfur, provided the amount of said lower valence polyvalent metal in said chelate is greater than 5 times the amount of said higher valence polyvalent metal. In each of the embodiments of the invention, the H₂S absorbed by the H₂S-selective absorbent and the hydrosulfide and/or sulfide not converted to elemental sulfur in the contact zone is thereafter reacted in an oxidation zone wherein the lower valence polyvalent metal chelating agent from the contact zone is oxidized to the higher valence state in an effective amount in order to complete the oxidation of said absorbed H₂S, hydrosulfide and/or sulfide to elemental sulfur. The enriched aqueous alkaline solution containing the polyvalent metal chelate and the H₂S-selective absorbent is regenerated in the oxidation zone and recycled as a lean H₂S-selective absorbent to the contact zone.

Specifically, in a first embodiment this invention provides a continuous process for the removing hydrogen sulphide from a sour gaseous stream comprising
A) in a contact zone contacting said gaseous stream with an aqueous alkaline scrubbing solution having a pH of a least 7 for absorption of the hydrogen sulphide in the form of hydrosulphide and/or sulphide, said solution also comprising a polyvalent metal chelate present in a lower valence state, and optionally also in a higher valence state,
B) thereafter, in an oxidation zone, introducing into the aqueous alkaline solution an oxygen-containing gas to generate an amount of higher valence state metal chelate by oxidation of lower valence state metal chelate present, the amount generated being at least the stoichometric amount required to oxidise the hydrosulphide and/or sulphide present in the alkaline solution to sulphur,
   and thereafter recirculating the alkaline solution comprising polyvalent metal chelate from the oxidation zone of step B) back to the contact zone of step A),
   characterised in that the solution contains an alkali and an H₂S-selective absorbent, and in that, when the gaseous stream is contacted with the aqueous alkaline solution, all the polyvalent metal chelate is present in the lower valence state or the amount of said lower valence state metal chelate present is greater than five times the amount of said higher valence state metal chelate.

The H₂S-selective absorbent is present in order to compensate for the reduced effectiveness of the aqueous alkaline solution utilized in the contact zone to absorb H₂S from a gaseous stream when the polyvalent metal chelate is present in all or substantially all in the reduced or lower valence state.

In a second embodiment of the invention, there is provided a continuous process for removing hydrogen sulphide from a sour gaseous stream comprising
contacting said gaseous stream with an aqueous alkaline scrubbing solution having a pH of at least 7 for absorption of the hydrogen sulphide in the form of hydrosulphide and/or sulphide, said solution also comprising a polyvalent metal chelate present in a higher and a lower valence state, and, during said contacting and in the same zone, introducing into the aqueous alkaline solution an oxygen-containing gas to generate an amount of higher valence state metal chelate by oxidation of lower valence state metal chelate, the amount generated being effective to oxidise the absorbed hydrogen sulphide to sulphur
characterised in that the solution contains an alkali and an H₂S-selective absorbent, and in that the amount of lower valence state metal chelate present in the solution is greater than five times the amount of higher valence state metal chelate present in the solution.

Simultaneously with the removal of hydrogen sulfide in the contact zone from the gaseous stream, carbon dioxide can be removed by the presence of a lean CO₂-selective absorbent in the aqueous scrubbing solution. The carbon dioxide absorbent may also be a solvent for hydrogen sulfide as well as carbon dioxide.

When a portion of the polyvalent metal is present in the higher valence state, some or all of the hydrogen sulfide is converted in the contact zone to elemental sulfur. Any hydrogen sulfide remaining is absorbed by the H₂S-selective absorbent and/or converted to hydrosulfide and/or sulfide by the aqueous alkaline scrubbing solution. In one embodiment of the invention, when the polyvalent metal chelate is present in all or substantially all in a lower valence state, the H₂S-selective absorbent and the alkalinity of the scrubbing solution are used to absorb the hydrogen sulfide from the sour gaseous stream. In another embodiment of the invention, the contact zone can contain an amount up to, equal to, or greater than a stoichiometric amount of the polyvalent metal chelate in the higher valence state of the metal which is required to convert the hydrogen sulfide present to sulfur. However, the lower valence polyvalent metal chelate present must be present in an amount greater than 5 times the amount of higher valence state polyvalent metal chelate present. The molar amount of polyvalent metal chelate present in the lower valence state is preferably greater than 10, and most preferably greater than 30 times the amount of polyvalent metal chelate present in the higher valence state.

The carbon dioxide which is absorbed can be removed by several different methods, the choice of which method is mainly dependent upon the amount of carbon dioxide present and whether the CO₂ is to be recovered. Preferably when the carbon dioxide is present in an amount less than 5 percent, it is stripped from the oxidation zone by the stripping action of the oxygen-containing gas utilized in the oxidation of the metal chelate. The carbon dioxide exits the process together with the vent gases from the oxidation zone. If it is desired to recover carbon dioxide from the process, this can be done in a carbon dioxide removal zone in which another vessel is placed to receive it between the contact zone and the oxidation zone where by stripping, reducing pressure, and heating, if necessary, the carbon dioxide is removed from the process. Removal of carbon dioxide at this point in the process is more efficient because of the lower pH of the aqueous scrubbing solution at this point in the process. The pH rises in the oxidation zone as hydroxyl ions are formed. Various other methods known to those skilled in the art can be used to remove carbon dioxide from the aqueous solution in the above described carbon dioxide removal zone.

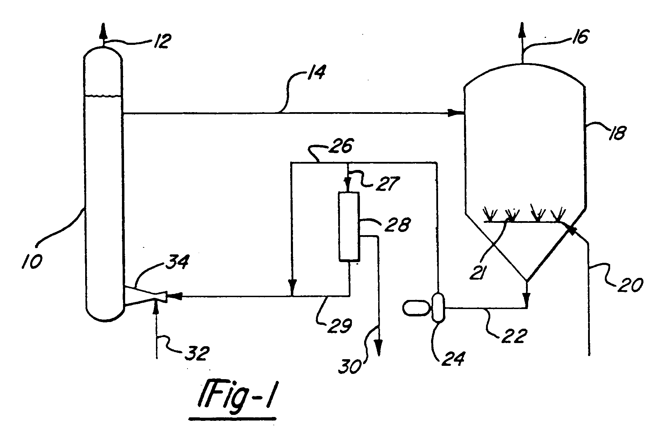

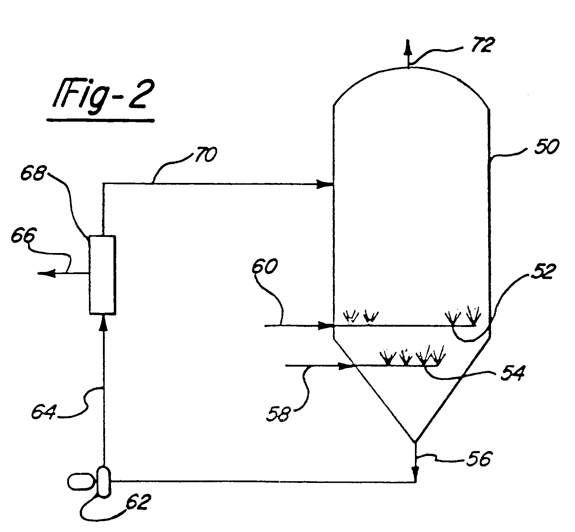

In Figures 1 and 2 there are shown two embodiments of the process of the invention in schematic form. Figure 1 shows a separate contact zone 10 and oxidizing zone 18. In Figure 2 the zone 50 functions as both a contact zone and an oxidizing zone.

The process of the invention is operated in one embodiment in a manner contrary to the teachings of most of the prior art processes for hydrogen sulfide removal. In these prior art processes, the polyvalent metal of the polyvalent metal chelate is present in the contact zone all or substantially all in an oxidized, or higher valence state. The polyvalent metal chelate, when present in the contact zone of the process of the invention in all or substantially all of the lower valence polyvalent metal, is ineffective in converting hydrogen sulfide, hydrosulfide and/or sulfide to elemental sulfur in the contact zone but is believed to act as a scavenger for oxygen radicals which are considered to be responsible for the degradation of the higher valence state chelating agent. Upon oxidation of the lower valence polyvalent metal chelate to the higher valence state in an oxidation zone, the polyvalent metal chelate becomes effective to convert hydrosulfide and/or sulfide to sulfur. The hydrosulfide and/or sulfide formed in the contact zone by reaction of the hydrogen sulfide with the aqueous alkaline solution and hydrogen sulfide absorbed by the H₂S-selective absorbent and by any CO₂-selective absorbent is thus oxidized to sulfur in the oxidation zone. In this embodiment of the invention, at least an effective amount of polyvalent metal chelate in an oxidizing or higher valence state is present in the oxidation zone. Said effective amount is defined as at least the stoichiometric amount required to convert the hydrogen sulfide present in the contact zone to sulfur and preferably up to 5 to 10 mole percent in excess thereof. When the higher valence state polyvalent metal chelate concentration in the contact zone of the process is zero, absorption of hydrogen sulfide is obtained by contact with the H₂S-selective absorbent and the formation of hydrosulfide and/or sulfide in the presence of the alkaline solution present in the contact zone of the process.

It is known in the prior art that polyvalent metal chelating agents, particularly those in the class of polyamino polycarboxylic acids, are subject to oxidative decomposition with precipitation of insoluble iron compounds as the chelating agent is decomposed. The decomposition of the polyamino carboxylic acid portion of the chelating agent is known to be accelerated in the presence of iron ions in the higher valence state. Such decomposition is discussed in GB-A-999,800 and in the Canadian Journal of Chemistry Vol. 58 No. 19 of October 1, 1980 Motekaitis et al. - The Iron (III)--Catalized Oxidation of EDTA In Aqueous Solution. The available evidence indicates that chelate degradation occurs through several mechanisms, the most important likely involving oxygen radicals. Maximizing the proportion of ferrous iron (II) to ferric iron (III) in the process of the invention has been found to minimize chelate degradation.

When mixed higher and lower valence state metal chelates are used in the process, at least a stoichiometric amount of a chelate in the higher valence state of the metal is present in the contact zone. The use of an H₂S-selective absorbent improves the hydrogen sulfide absorption efficiency and the transfer rate of hydrogen sulfide from the gas phase to the liquid phase. The presence in the contact zone of higher valence state chelate is important, especially where the process is operated at the lower end of the pH range, in order to provide a more economical solution flow rate. Recirculation from the oxidation zone to the contact zone of the process of the invention of at least said stoichiometric amount of higher valence state polyvalent metal chelate can be used.

For example, when a ferrous iron chelate utilized in the contact zone of the process is oxidized to the ferric iron chelate in the oxidation zone in an effective amount, which is sufficient to oxidize the absorbed H₂S, hydrosulfide and/or sulfide present in the aqueous alkaline solution fed to the oxidation zone from the contact zone, the oxidative degradation of the chelating agent in the contact zone is substantially avoided. This is accomplished by the control of oxidizer conditions so as to keep the presence therein of the iron chelate in the higher valence state to a minimum while maintaining a large excess of iron chelate in the lower valence state.

In one embodiment of the process of the invention, hydrogen sulfide is absorbed from the gaseous phase of a sour gaseous stream in a contact zone primarily by contact with an H₂S-selective absorbent and by reaction with hydroxide ion present in an aqueous scrubbing solution containing a base. Hydrogen sulfide is absorbed by the H₂S-selective absorbent and hydrosulfide and sulfide are formed. The carbon dioxide which may be present together with the hydrogen sulfide is absorbed by a lean CO₂-selective absorbent. Some carbonate and bicarbonate may be formed by reaction of carbon dioxide with hydroxide ion. Hydrosulfide and sulfide are formed. The iron chelating agent present in the aqueous solution is present in this embodiment of the invention in all or substantially all in the reduced or lower valence state rather than as is conventional in the oxidized or higher valence state. Even in an embodiment of the invention in which the iron chelate is present in the contact zone in an amount at least equal to the Stoichiometric amount required to convert the hydrogen sulfide present to sulfur, the absorptivity of the aqueous alkaline solution is reduced over that of prior art aqueous absorption solutions containing a major amount of a polyvalent metal chelate in the higher valence state in comparison with a lower valence state polyvalent metal chelate. Thus, some of the hydrogen sulfide is not oxidized to sulfur. To compensate for this reduced absorption capacity of the aqueous alkaline solution, the process of the invention provides for the use of a H₂S-selective absorbent, which may be a water soluble CO₂-selective absorbent which acts primarily to absorb carbon dioxide and secondarily to absorb hydrogen sulfide.

After absorption of hydrogen sulfide in the contact zone, an enriched alkaline solution and an enriched H₂S-selective absorbent is fed to an oxidation zone wherein absorbed H₂S, hydrosulfide, and sulfide are exposed to a large volume of an oxygen containing gas such as air, with or without additional heating. An effective amount of the polyvalent metal chelate in an oxidizing or higher valence state is produced in the oxidation zone which is effective in converting the absorbed H₂S, hydrosulfide, and sulfide to sulfur. The polyvalent metal chelate is thereby reduced to a lower valence state. In one embodiment of the process of the invention wherein the polyvalent metal chelate is present in all or substantially all in the lower valence state in the contact zone of the process, the formation of a sulfur product occurs primarily in the oxidation zone. In another embodiment of the invention, the polyvalent metal chelate is present in the contact zone in an amount at least equal to the stoichiometric amount required to convert to sulfur the hydrogen sulfide present in the contact zone. Thus the oxidation zone of the process is used primarily to regenerate the polyvalent metal chelate so as to convert it from the reduced or lower valence state to the oxidized or higher valence state for recycling to the contact zone of the process, as well as to strip carbon dioxide from the absorbent mixture and regenerate any CO₂-selective absorbent for recycling to the contact zone of the process. Carbon dioxide may also be removed in a carbon dioxide removal zone located either before or after the oxidation zone in the process.

The H₂S- and optionally CO₂-selective absorbent(s) can be either a physical solvent or a regenerable chemical solvent but a physical solvent in preferred. The vapor pressure of the solvent should be low enough so that it is not stripped from the solution in substantial amounts in the contact zone or oxidation zone of the process. The H₂S- and CO₂-selective absorbent can be either an organic or an inorganic solvent or a solvent which, in combination with the aqueous alkaline solution, increases the solubility of the combined solution with respect to hydrogen sulfide and/or carbon dioxide. Some hydrogen sulfide selective solvents may also absorb carbon dioxide present in the gaseous stream containing hydrogen sulfide. This carbon dioxide can be stripped from the aqueous alkaline solution in the oxidation zone. Examples of suitable H₂S- and CO₂-selective absorbents are N,N-dimethylformamide, sulfolane, N-methylpyrrolidone, propylene carbonate, or mixtures thereof. Examples of suitable CO₂-selective absorbents are, for example, dimethylsulfoxide, diethylene glycol monoethyl ether, polyethers of ethylene and propylene glycols, tetraethyleneglycol dimethyl ether, 2,4-pentanedione, 2,5-hexanedione, cyclohexanone, methylisopropyl ketone, glycerine acetate, and mixtures thereof. The particular carbon dioxide absorbent chosen is a matter of choice given the qualifications that the CO₂-selective absorbent must not affect the activity of the polyvalent metal chelate and must also increase the absorption of carbon dioxide by the aqueous alkaline solution. Examples of suitable H₂S-selective absorbents are, for example, tripotassium phosphate, tributyl phosphate, tetrahydrothiophene dioxide, dimethyldithiodipropionate, N-methyl-2-pyrrolidone, N-formylmorpholine, N-formyldimethylmorpholine, dialkyl ethers of polyethylene glycols, and dimethyl or diethyl glycine salts, and mixtures thereof. The particular H₂S absorbent chosen is a matter of choice and not limited to these examples given the qualifications that the solvent must not affect the activity of the polyvalent metal chelate and must increase the absorption of H₂S by the aqueous alkaline solution.

Referring to one embodiment of the process of the invention illustrated in Figure 1 of the drawings, a sour gas is introduced through line 32 into a venturi scrubber 34 so as to mix with a polyvalent metal chelate alkaline solution which may contain the H₂S- and optionally CO₂-selective absorbent(s) which enters scrubber 34 through line 29 which is fed by line 26 from pump 24. The gas and liquid mixture passes into bubble tower contact zone 10 for further contact. A gas essentially free of hydrogen sulfide leaves bubble tower 10 through line 12 and polyvalent metal chelate solution in admixture with absorbed H₂S, absorbed CO₂, hydrogen sulfide, hydrosulfide, and/or sulfide and sulfur passes through line 14 to oxidation zone 18. Air or other oxygen containing gas is fed to oxidation zone 18 through line 20 and is distributed within oxidation zone 18 by means of sparging apparatus 21. Spent air or other oxygen-containing gas is vented through line 16. The lower valence metal in the polyvalent metal chelate solution present in oxidation zone 18 is oxidized to the higher valence state of the metal to provide at least an effective amount to convert the absorbed H₂S, sulfide and/or hydrosulfide present therein to sulfur. In the oxidation zone, the CO₂ is stripped from the mixture and the amount of oxidation of said polyvalent metal chelate is controlled so as to preferably provide an excess of at least the stoichiometric amount of polyvalent metal chelate in the higher valence state needed to convert to sulfur the H₂S, hydrosulfide and/or sulfide present in said contact zone 10. The aqueous alkaline solution comprising the H₂S- and/or CO₂-selective absorbent, sulfur, and all or substantially all of the polyvalent metal chelate in the reduced or lower valence state exits oxidation zone 18 through line 22 and is pumped by means of pump 24 through line 26 into line 29 and then to the venturi scrubber 34. A bypass is shown through sulfur removal zone 28 by way of line 27 for removal of at least a portion of sulfur in a sulfur recovery zone. Sulfur is removed from the System through line 30. The polyvalent metal chelate solution exits sulfur removal zone 28 through line 29, is joined by line 26, and is recycled thereafter to venturi scrubber 34 and then to contact zone 10.

Referring to Figure 2, there is shown another embodiment of the invention which is particularly suited for the removal of hydrogen sulfide and carbon dioxide in which a combined contact and oxidation zone 50 is fed through line 60 with an oxygen containing gas such as air which is distributed within said zone 50 by sparging apparatus 52. Sour gas is fed through line 58 into said zone and distributed therein through sparging apparatus 54. A mixture of gases, essentially free of hydrogen sulfide, but containing carbon dioxide, spent air or other oxygen-containing gas, is discharged through vent 72. A small amount of the polyvalent metal chelate solution is removed for sulfur recovery through line 56 by means of pump 62 and passes through line 64 to sulfur removal zone 68 from which sulfur is removed through line 66. The polyvalent metal chelate solution is returned to the contact/oxidation zone 50 through line 70.

In one embodiment of the process of the invention, hydrogen sulfide is absorbed from the gaseous phase in a contact zone both by a H₂S-selective absorbent and by reaction with hydroxide ion present in an aqueous alkaline solution. Hydrosulfide and/or sulfide are formed. Carbon dioxide is absorbed by the lean CO₂-selective absorbent. Some carbonate and bicarbonate can also be formed by reaction with the hydroxide ion present in the aqueous alkaline solution. All or substantially all of the polyvalent metal chelate can be present in the contact zone in the reduced or lower valence state of the metal. Thus, when the oxidized polyvalent metal chelate is present in the contact zone in less than the stoichiometric amount needed to convert all the hydrogen sulfide present to sulfur, there is a reduction absorptivity of the aqueous alkaline solution since oxidation of the hydrosulfide and/or sulfide does not take place so as to produce water insoluble sulfur. The absorbed hydrogen sulfide, hydrosulfide and/or sulfide are converted to sulfur in the oxidation zone. The absorption capacity of the aqueous alkaline solution in the contact zone is increased by the presence of the H₂S-selective absorbent.

In another embodiment of the process, the higher valence state polyvalent metal chelate is present in at least a stoichiometric amount. Excessive degradation of the polyvalent metal chelate need not occur provided the amount of polyvalent metal chelate present in the lower valence state of the metal is generally greater than 5 times the amount of polyvalent metal chelate present in the higher valence state of the metal. To increase the absorption capacity of the aqueous alkaline solution, one embodiment of the process of the invention provides for the use of an H₂S-selective absorbent and up to at least a stoichiometric amount, based upon the hydrogen sulfide absorbed in the contact zone, of the polyvalent metal chelating agent in the higher valence state. In addition, the use of a CO₂-selective absorbent, which may also absorb hydrogen sulfide, improves the absorption capacity of the aqueous alkaline solution. The aqueous alkaline solution containing an enriched H₂S-selective absorbent and polyvalent metal chelate is thereafter removed from the contact zone and sent to the oxidation zone wherein an effective amount of polyvalent metal chelate in an oxidizing or higher valence state is produced. Said amount being at least a stoichiometric amount required to produce sulfur by reaction of said chelate in said higher valence state with said absorbed H₂S, hydrosulfide, and/or sulfide, a lean CO₂-selective absorbent, a sulfur product, and a polyvalent metal chelate product in a reduced valence state.

In order to convert the polyvalent metal chelating agent from the lower valence state to the higher valence state, in which it is effective as a reactant for the oxidation of H₂S, hydrosulfide, and/or sulfide, the polyvalent metal chelate can be exposed in the oxidation zone to an oxygen-containing gas such as air with or without heating so as to promote the oxidation process. The stoichiometric amount of higher valence state polyvalent metal chelate is not produced all at once but rather in small increments. Chelate degradation is reduced by maintaining a low concentration of chelate in the higher valence state. Control of the amount of air introduced in the oxidation zone allows an effective amount of polyvalent metal chelate to be present in the higher valence state or oxidized state which is sufficient to function as a reactant in the oxidation of hydrogen sulfide, hydrosulfide and/or sulfide to elemental sulfur. The polyvalent metal chelate is simultaneously reduced to the lower valence state. Thereafter the sulfur is separated in a sulfur recovery zone by conventional separation processes such as filtration, flotation, and the like and the residual aqueous alkaline solution, containing H₂S- and optionally CO₂-selective absorbent(s) and all or substantially all of said polyvalent metal chelate in the reduced or lower oxidation state, is returned to the contact zone.

The particular type of gaseous stream treated is not critical, as will be evident to those skilled in the art. Streams particularly suited to removal of H₂S by the practice of the invention are naturally-occurring gases, synthesis gases, process gases, hydrocarbon stream gases, and fuel gases produced by gasification procedures, e.g., gases produced by the gasification of coal, petroleum, shale, tar sands, and others. Particularly preferred, in order of preference, are (1) natural gas streams, (2) waste gases, (3) refinery feedstocks composed of gaseous hydrocarbon streams, (4) coal gasification streams, and (5) other gaseous hydrocarbon streams. The term "hydrocarbon stream(s)", as employed herein, is intended to include streams containing significant quantities of hydrocarbon (both paraffinic and aromatic), it being recognized that such streams contain significant "impurities" not technically defined as a hydrocarbon. Streams containing principally a single hydrocarbon e.g., methane, are eminently suited to the practice of the invention. Streams derived from the gasification and/or partial oxidation of gaseous or liquid hydrocarbon may be treated by the invention. The H₂S and/or CO₂ content of the type of streams contemplated will vary extensively, but, in general, will range from 0.1 percent to 10 percent by volume. The amount of H₂S and/or CO₂ present in the gaseous stream is not generally a limiting factor in the practice of the invention.

Temperatures employed in the contact zone wherein hydrogen sulfide is absorbed utilizing an aqueous alkaline solution containing an H₂S and/or CO₂-selective absorbent and a polyvalent metal chelate are not generally critical. The reaction is preferably carried out at a temperature below the melting point of sulfur and the process temperature should be low enough to prevent loss of significant amounts of carbon dioxide absorbent from the system. But thermal and physical properties of the absorbent must be taken into consideration. Generally, the operating range temperature is from 10 to 90°C; preferably, from 25 to 50°C; and most preferably from 20 to 40°C. Contact times in the contact zone can generally range from 1 to 270 seconds or longer; preferably 2 to 120 seconds; and most preferably 2 seconds to 60 seconds.

In the oxidation zone, temperatures are not generally critical and can vary widely. Preferably, the oxidation zone should be maintained at substantially the same temperature as the contact zone wherein hydrogen sulfide is absorbed by an H₂S-selective absorbent and by an aqueous alkaline solution. Where heat is utilized to assist the oxidation of the H₂S, hydrosulfide, and/or sulfide to elemental sulfur, cooling of the aqueous alkaline solution is not required before return of said solution to the contact zone although it is preferred that the contact zone be cooler to increase the rate of hydrogen sulfide and/or carbon dioxide absorption. In general, the temperatures in the oxidation zone are similar to those utilized in the contact zone. The preferred and most preferred temperatures are also similar.

Pressure conditions in the contact zone and the oxidation zone can vary widely. The range of operating pressure in these zones is generally atmospheric pressure to 100 atmospheres (0.1 - 10 MPa). The preferred pressure is atmospheric pressure to 20 atmospheres (0.1 - 2 MPa), and the most preferred pressure is atmospheric to 3 atmospheres (0.1 - 0.3 MPa). At high pressures, the liquification or absorption of hydrocarbon components of the feed gas can take place. The pressure-temperature relationships involved are well understood by those skilled in the art and need not be detailed here.

The process operating range for pH is generally 7 to 10. The preferred range is 7 to 9, and the most preferred range of pH is from 8 to 9. In general, operation at the highest portion of the range is preferred in order to operate at a high efficiency of hydrogen sulfide absorption. Since the hydrogen sulfide is an acid gas, there is a tendency for the hydrogen sulfide to lower the pH of the aqueous alkaline solution. The optimum pH also depends upon the stability of the particular polyvalent metal chelate chosen. The ability of the amino acid portion of the polyvalent metal chelate to protect the metal from precipitation as an insoluble sulfide or hydroxide at high pH values will determine how high in pH the aqueous alkaline solution can be used. At pH values below 6, the efficiency of hydrogen sulfide absorption is so low so as to be impractical. At pH values greater than 10, for instance, with iron as the polyvalent metal, the precipitation of insoluble iron hydroxide may occur resulting in decomposition of the iron chelate.

The minimum effective amount of polyvalent metal chelate in the higher valence state which is released in the oxidation zone in one embodiment of the invention is at least a stoichiometric amount, or an amount sufficient to convert to sulfur all of the H₂S present in the contact zone. The maximum effective amount is generally 10 mole percent, preferably 5 mole percent, and most preferably 2 mole percent in excess of the stoichiometric amount of polyvalent metal chelate.

In an embodiment of the invention where greater than the required stoichiometric amount of polyvalent metal chelate in the higher valence state is released in the oxidation zone and recirculated to the contact zone, the lower valence polyvalent metal chelate is maintained at a concentration of greater than 5 times the amount of said chelate present in the higher valence state. In this embodiment of the process of the invention, the amount of polyvalent metal chelate in the higher valence state which is present in the oxidation zone is controlled so as to form an amount of higher valence polyvalent metal chelate equal to or in excess of that required for conversion of the H₂S, present in the contact zone, to sulfur.

Any oxidizing polyvalent metal chelate can be used but those in which the polyvalent metal is iron, copper, and manganese are preferred, particularly iron. Other useful metals which can provide the polyvalent metal of the polyvalent metal chelate are generally those that are capable of undergoing a reduction/-oxidation reaction, that is, those metals capable of being reduced to a lower valence state by reaction with hydrosulfide and/or sulfide ions and which can be regenerated by oxidation with an oxygen containing gas to a higher valence state. Specific examples of useful metals include, besides the preferred metals listed above, nickel, chromium, cobalt, tin, vanadium, platinum, palladium, and molybdenum. The metals, which are normally supplied as the salt, oxide, or hydroxide, can be used alone or as mixtures. The polyvalent metal chelate usually is from 1 to 90 percent by weight of the total scrubbing solution described below. Preferably, the polyvalent metal chelate is from 5 to 50 percent by weight of the total scrubbing solution. The amount of higher valence polyvalent metal chelate present is from 0.1 to 10 percent by volume of the sour gaseous stream; the amount of lower valence polyvalent metal chelate present is at least five time the amount of the higher valence polyvalent metal chelate.

The preferred polyvalent metal chelates are coordination complexes in which the polyvalent metals form chelates by reaction with an aminocarboxylic acid, an amino polycarboxylic acid, a polyamino carboxylic acid, or a polyamino polycarboxylic acid. Preferred coordination complexes are those in which the polyvalent metal forms a chelate with an acid having the formula: 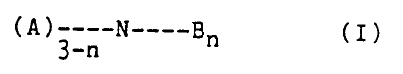
where n is two or three; A is a lower alkyl or hydroxylalkyl group; and B is a lower alkyl carboxylic acid group. "Lower alkyl" means from 1 to 6 carbon atoms.

A second class of preferred acids utilized in the formation of the polyvalent metal chelates utilized in the process of the invention is an amino polycarboxylic acid represented by the formula: 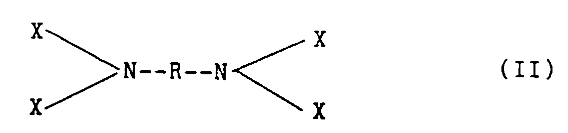
wherein two to four of the X groups are lower alkyl carboxylic groups, zero to two of the X groups are lower alkyl groups, hydroxylalkyl groups, or 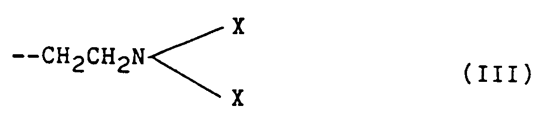
and wherein R is a divalent organic group. Representative divalent organic groups are ethylene, propylene, isopropylene or alternatively cyclohexane or benzene groups where the two hydrogen atoms replaced by nitrogen are in the one or two positions, and mixtures thereof.

The polyvalent metal chelates useful in the process of the invention are readily formed in an aqueous solution by reaction of an appropriate salt, oxide, or hydroxide of the polyvalent metal and the aminocarboxylic acid present in the acid form or as an alkali metal or ammonium salt thereof. Exemplary amino polycarboxylic acids include (1) amino acetic acids derived from ammonia or 2-hydroxyl alkyl amines, such as glycine, diglycine (imino diacetic acid), NTA (nitrilo triacetic acid), 2-hydroxy alkyl glycine; di-hydroxyalkyl glycine, and hydroxyethyl or hydroxypropyl diglycine; (2) amino acetic acids derived from ethylene diamine, diethylene triamine, 1,2-propylene diamine, and 1,3-propylene diamine, such as EDTA (ethylene diamine tetraacetic acid), HEDTA (2-hydroxyethyl ethylenediamine tetraacetic acid), DETPA (diethylene triamine pentaacetic acid); and (3) amino acetic acid derivatives of cyclic 1,2-diamines, such as 1,2-diamino cyclohexane N,N-tetraacetic acid, and 1,2-phenylenediamine-N,N-tetraacetic acid. The iron chelates of NTA, EDTA and HEDTA are preferred.

The buffering agents which are useful as components of the aqueous alkaline scrubbing solution of the invention are in general those which are capable of maintaining the aqueous alkaline solution at a pH generally in the operating pH range of 7 to 10. The buffering agents should be water soluble at the concentrations in which they are effective. Examples of suitable buffering agents operable in the process of the invention are the ammonium or alkali metal salts of carbonates, bicarbonates, or borates. Examples of useful specific buffering agents within these classes of buffering agents are sodium carbonate or bicarbonate or sodium borate. Where the hydrogen sulfide containing feed gas also contains carbon dioxide at a volume percent of greater than 5%, a buffer or mixtures of buffers are used. The carbonate or bicarbonate buffers are the preferred buffers for use in the process of the invention. These may be produced in situ by the use of an alkali in an amount suitable to provide a pH of 7 to 10. Preferably sodium hydroxide or other alkali metal hydroxide is used in the preparation of the aqueous alkaline scrubbing solution. Where the hydrogen sulfide containing feed gas contains carbon dioxide only in a minor amount, (less than 5%) then the borate buffers, for example, borax or sodium borate (Na₂B₄O₇) are useful.

In the oxidation zone of the process, the preferred oxygen containing gas utilized is air. In addition, any inert gas may be utilized in combination with pure oxygen as an oxidizing gas. The operating range of oxygen concentration in the oxidation zone usually is from 1 to 100 percent by volume. The preferred range of oxygen concentration is 5 to 25 percent by volume, and the most preferred range is 5 to 10 percent by volume. In general, mild oxidizing conditions are preferred in the process of the invention. The oxygen-containing gas should be introduced to the oxidation zone in such a manner so as to disperse it throughout the aqueous alkaline solution and to minimize intense, localized oxidation. The total amount of oxygen fed to the oxidation zone is dependent upon the amount of hydrosulfide and/or sulfide absorbed in the aqueous alkaline solution which is fed to the oxidation zone from the contact zone. The minimum amount that can be fed to the oxidation zone usually is one-half mole of oxygen per mole of sulfide or hydrosulfide in the aqueous alkaline solution feed liquid. The operating range of total oxygen fed to the oxidation zone is dependent upon the efficiency of oxygen mixing and absorption into the aqueous alkaline solution present in the oxidation zone. In the process of the invention, essentially all the dissolved sulfide and/or hydro-sulfide present in the oxidation zone is converted to crystalline sulfur. Since mild conditions are preferred, the operating range of total oxygen fed can be broad while carefully controlling the heating and oxygen concentration conditions in the oxidation zone. Over oxidation can result in the formation of undesirable thiosulfate and sulfate salts. The operating range for oxygen present in the oxidation zone is generally one-half mole of oxygen per mole of sulfide or hydrosulfide up to five moles, preferably 1 mole to 3 moles of oxygen per mole of sulfide or hydrosulfide present in the aqueous alkaline solution fed to the oxidation zone. A preferred amount of oxygen utilized is that amount which results in zero of the polyvalent metal chelate in the higher valence state leaving the oxidation zone.

Any of the conventional methods for recovery of elemental sulfur employed in processes similar to the process of the invention can be employed in the present process. For example, sulfur can be recovered by settling subsequent to flocculation, contrifugation, filtration, flotation, and the like. The method of sulfur recovery is not critical to the process of the invention. It is desirable to recover as much of the aqueous alkaline scrubbing solution as possible for recycle back to the contact zone of the process to minimize physical losses of the polyvalent metal chelating agent and the H₂S- and optionally CO₂-selective absorbent(s).

## Claims

1. A continuous process for the removing hydrogen sulphide from a sour gaseous stream comprising
A) in a contact zone contacting said gaseous stream with an aqueous alkaline scrubbing solution having a pH of at least 7 for absorption of the hydrogen sulphide in the form of hydrosulphide and/or sulphide, said solution also comprising a polyvalent metal chelate present in a lower valence state, and optionally also in a higher valence state,
B) thereafter, in an oxidation zone, introducing into the aqueous alkaline solution an oxygen-containing gas to generate an amount of higher valence state metal chelate by oxidation of lower valence state metal chelate present, the amount generated being at least the stoichometric amount required to oxidise the hydrosulphide and/or sulphide present in the alkaline solution to sulphur,
and thereafter recirculating the alkaline solution comprising polyvalent metal chelate from the oxidation zone of step B) back to the contact zone of step A),
characterised in that the solution contains an alkali and an H₂S-selective absorbent, and in that, when the gaseous stream is contacted with the aqueous alkaline solution, all the polyvalent metal chelate is present in the lower valence state or the amount of said lower valence state metal chelate present is greater than five times the amount of said higher valence state metal chelate.

2. A process as claimed in Claim 1, wherein carbon dioxide is removed in a carbon dioxide removal zone between the contact zone and the oxidation zone.

3. A continuous process for removing hydrogen sulphide from a sour gaseous stream comprising
contacting said gaseous stream with an aqueous alkaline scrubbing solution having a pH of at least 7 for absorption of the hydrogen sulphide in the form of hydrosulphide and/or sulphide, said solution also comprising a polyvalent metal chelate present in a higher and a lower valence state, and, during said contacting and in the same zone, introducing into the aqueous alkaline solution an oxygen-containing gas to generate an amount of higher valence state metal chelate by oxidation of lower valence state metal chelate, the amount generated being effective to oxidise the absorbed hydrogen sulphide to sulphur
characterised in that the solution contains an alkali and an H₂S-selective absorbent, and in that the amount of lower valence state metal chelate present in the solution is greater than five times the amount of higher valence state metal chelate present in the solution.

4. A process as claimed in Claim 1 or Claim 3, wherein any CO₂ present is at least partially removed by the stripping action of the said oxygen-containing gas.

5. A process as claimed in any one of the preceding claims, wherein said H₂S-selective absorbent is a physical solvent for H₂S.

6. A process as claimed in any one of the preceding claims, wherein said scrubbing solution also contains a CO₂-selective absorbent.

7. A process as claimed in any one of the preceding claims, wherein the H₂S-selective absorbent also selectively absorbs CO₂.

8. A process as claimed in Claim 7, wherein said H₂S- and CO₂-selective absorbent is N,N-dimethyl-formamide, sulfolane, N-methylpyrrolidone, or propylene carbonate, or any combination thereof.

9. A process as claimed in any one of Claims 1 to 6, herein the H₂S-selective absorbent is tripotassium phosphate, tributyl phosphate, tetra-hydrothiophene dioxide, dimethyldithiodipropionate, N-methyl-2-pyrrolidone, N-formylmorpholine, N-formyldimethylmorpholine, a dialkyl ether of a polyethylene glycol, or a dimethyl or diethyl glycerin salt, or any combination thereof.

10. A process as claimed in Claim 6, wherein the CO₂-selective absorbent is dimethylsulfoxide, diethylene glycol monoethyl ether, a polyether of ethylene and propylene glycols, tetraethylene glycol dimethyl ether, 2,4-pentanedione, 2,5-hexanedione, cyclohexanone, methylisopropyl ketone, or glycerine acetate, or any combination thereof.

11. A process as claimed in any one of the preceding claims, additionally comprising the step of feeding sulfur-containing aqueous alkaline scrubbing solution to a sulfur recovery zone; removing from said solution at least a portion of said sulfur; and thereafter, recycling said treated solution for contact with the sour gaseous stream.

12. A process as claimed in any one of the preceding claims, wherein said polyvalent metal chelate is from 5 to 50 percent by weight of the aqueous alkaline solution.

13. A process as claimed in any one of the preceding claims, wherein the aqueous alkaline scrubbing solution contains an amount of higher valence polyvalent metal chelate from 0.1 to 10 percent by volume of said stream.

14. A process as claimed in any one of the preceding claims, wherein said polyvalent metal in said chelate is iron, manganese, copper, nickel, chromium, cobalt, tin, vanadium, platinum, palladium, or molybdenum, or any combination thereof.

15. A process as claimed in Claim 14, wherein the polyvalent metal is iron.

16. A process as claimed in any one of the preceding claims, wherein said polyvalent metal chelate is a coordination complex in which said polyvalent metal forms a chelate with at least one of an aminocarboxylic acid, an amino polycarboxylic acid, a polyamino carboxylic acid, or a polyamino polycarboxylic acid.

17. A process as claimed in Claim 16, wherein the polyvalent metal is chelated with an amino polycarboxylic acid represented by the formula: 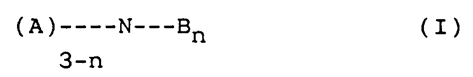 wherein n is two or three; B is a C₁-C₆ alkyl carboxylic acid group; and A is a C₁-C₆ alkyl or hydroxyalkyl group or a polyamino polycarboxylic acid represented by the formula: 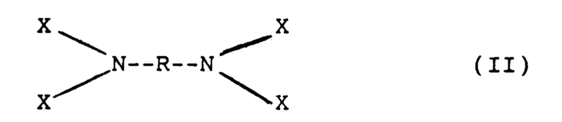 wherein X is a C₁-C₆ alkyl carboxylic acid group, a C₁-C₆ alkyl group, a hydroxyalkyl group, or 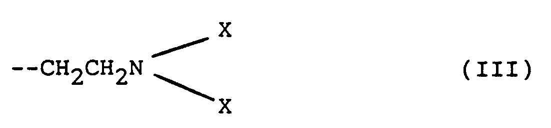 wherein two to four of the X groups are C₁-C₆ alkyl carboxylic acid groups, zero to two of the X groups are C₁-C₆ alkyl groups, hydroxyalkyl groups, or a group of formula (III), and R is a divalent organic group.

18. A process as claimed in Claim 16, wherein the polyvalent metal is chelated with an amino polyacetic acid (1) derived from ammonia or 2-hydroxyalkyl amines; (2) derived from ethylene diamine, diethylenetriamine, 1,2-propylene diamine, or 1,3-propylene diamine; or (3) derived from amino acetic acid derivatives of cyclic 1,2-diamines.

19. A process as claimed in Claim 18, wherein said amino polycarboxylic acid is nitrilotriacetic acid, 2-hydroxyethylethylenediamine tetraacetic acid, or ethylenediamine tetraacetic acid.

20. A process as claimed in any one of the preceding claims, wherein the aqueous alkaline scrubbing solution contains a buffering agent selected from ammonium and alkali metal salts of carbonates, bicarbonates, or borates and mixtures thereof.

21. A process as claimed in any one of the preceding claims, wherein the said alkali is ammonium hydroxide or an alkali metal hydroxide.

22. A process as claimed in any one of the preceding claims, wherein more than one polyvalent metal chelate is present in said aqueous alkaline scrubbing solution.

## Patentansprüche

1. Kontinuierliches Verfahren zum Entfernen von Schwefelwasserstoff aus einem sauren Gasstrom, umfassend
A) Inkontaktbringen des Gasstromes in einer Kontaktzone mit einer wässrigen alkalischen Waschlösung mit einem pH-Wert von mindestens 7 zur Absorption des Schwefelwasserstoffs in Form von Hydrogensulfid und/oder Sulfid, wobei die Lösung auch ein polyvalentes Metallchelat umfaßt, welches in einem niedrigen Valenzzustand und gegebenenfalls auch in einem höheren Valenzzustand vorhanden ist,
B) danach, in einer Oxidationszone, Einbringen eines Sauerstoff enthaltenden Gases in die wässrige alkalische Lösung, um durch Oxidation von vorhandenem Metallchelat in niedrigem Valenzzustand eine Menge von Metallchelat in höherem Valenzzustand zu erzeugen, wobei die erzeugte Menge mindestens die stöchiometrische Menge ist, die erforderlich ist, um das in der alkalischen Lösung vorhandene Hydrogensulfid und/oder Sulfid zu Schwefel zu oxidieren,
und danach Rückführen der polyvalentes Metallchelat enthaltenden alkalischen Lösung von der Oxidationszone aus Schritt B) zur Kontaktzone von Schritt A),
dadurch gekennzeichnet, daß die Lösung ein Alkali und ein H₂S-selektives Absorbens enthält, und daß, wenn der Gasstrom mit der wässrigen alkalischen Lösung in Kontakt gebracht wird, das gesamte polyvalente Metallchelat in niedrigem Valenzzustand vorhanden ist, oder die Menge von vorhandenenem Metallchelat in niedrigem Valenzzustand mehr als das fünffache der Menge von Metallchelat in höherem Valenzzustand beträgt.

2. Verfahren nach Anspruch 1, wobei Kohlendioxid in einer Kohlendioxidentfernungszone zwischen der Kontaktzone und der Oxidationszone entfernt wird.

3. Kontinuierliches Verfahren zum Entfernen von Schwefelwasserstoff aus einem sauren Gasstrom, umfassend
Inkontaktbringen des Gasstromes mit einer wässrigen alkalischen Waschlösung mit einem pH-Wert von mindestens 7 zur Absorption des Schwefelwasserstoffs in Form von Hydrogensulfid und/oder Sulfid, wobei die Lösung auch ein polyvalentes Metallchelat umfaßt, welches in einem höheren und einem niedrigen Valenzzustand vorhanden ist, und während des Inkontaktbringens und in der gleichen Zone, Einbringen eines Sauerstoff enthaltenden Gases in die wässrige alkalische Lösung, um durch Oxidation von Metallchelat in niedrigem Valenzzustand eine Menge von Metallchelat in höherem Valenzzustand zu erzeugen, wobei die erzeugte Menge wirksam ist um den absorbierten Schwefelwasserstoff zu Schwefel zu oxidieren,
dadurch gekennzeichnet, daß die Lösung ein Alkali und ein H₂S-selektives Absorbens enthält, und daß die Menge von in der Lösung vorhandenem Metallchelat in niedrigem Valenzzustand mehr als das fünffache der in der Lösung vorhandenen Menge von Metallchelat in höherem Valenzzustand beträgt.

4. Verfahren nach Anspruch 1 oder 3, wobei alles vorhandene CO₂ durch die Waschwirkung des Sauerstoff enthaltenden Gases mindestens teilweise entfernt wird.

5. Verfahren nach einem der vorhergehenden Ansprüche, wobei das H₂S-selektive Absorbens ein physikalisches Lösungsmittel für H₂S ist.

6. Verfahren nach einem der vorhergehenden Ansprüche, wobei die Waschlösung auch ein CO₂-selektives Absorbens enthält.

7. Verfahren nach einem der vorhergehenden Ansprüche, wobei das H₂S-selektive Absorbens auch selektiv CO₂ absorbiert.

8. Verfahren nach Anspruch 7, wobei das H₂S- und CO₂-selektive Absorbens N,N-Dimethylformamid, Sulfolan, N-Methylpyrrolidon oder Propylencarbonat oder eine Kombination davon ist.

9. Verfahren nach einem der Ansprüche 1 bis 6, worin das H₂S-selektive Absorbens Trikaliumphosphat, Tributylphosphat, Tetrahydrothiophendioxid, Dimethyldithiodipropionat, N-Methyl-2-pyrrolidon, N-Formylmorpholin, N-Formyldimethylmorpholin, ein Dialkylether eines Polyethylenglykols oder ein Dimethyl- oder Diethylglycerinsalz oder eine Kombination davon ist.

10. Verfahren nach Anspruch 6, wobei das CO₂-selektive Absorbens Dimethylsulfoxid, Diethylenglykolmonoethylether, ein Polyether von Ethylen- und Propylenglykolen, Tetraethylenglykoldimethylether, 2,4-Pentandion, 2,5-Hexandion, Cyclohexanon, Methylisopropylketon oder Glycerinacetat oder eine Kombination davon ist.

11. Verfahren nach einem der vorhergehenden Ansprüche, weiterhin umfassend den Schritt des Einspeisens von Schwefel enthaltender wässriger alkalischer Waschlösung in eine Schwefelrückgewinnungszone, Entfernen mindestens eines Teils des Schwefels aus der Lösung, und danach, Rückführen der behandelten Lösung zum Inkontaktbringen mit dem sauren Gasstrom.

12. Verfahren nach einem der vorhergehenden Ansprüche, wobei das polyvalente Metallchelat von 5 bis 50 Gewichtsprozent der wässrigen alkalischen Lösung ist.

13. Verfahren nach einem der vorhergehenden Ansprüche, wobei die wässrige alkalische Waschlösung eine Menge vom polyvalentem Metallchelat in höherem Valenzzustand von 0,1 bis 10 Volumenprozent des Stroms enthält.

14. Verfahren nach einem der vorhergehenden Ansprüche, wobei das polyvalente Metall in dem Chelat Eisen, Mangan, Kupfer, Nickel, Chrom, Kobalt, Zinn, Vanadium, Platin, Palladium oder Molybdän oder eine Kombination davon ist.

15. Verfahren nach Anspruch 14, wobei das polyvalente Metall Eisen ist.

16. Verfahren nach einem der vorhergehenden Ansprüche, wobei das polyvalente Metallchelat ein Koordinationskomplex ist, worin das polyvalente Metall mit mindestens einer Aminocarbonsäure, einer Aminopolycarbonsäure, einer Polyaminocarbonsäure oder einer Polyaminopolycarbonsäure ein Chelat bildet.

17. Verfahren nach Anspruch 16, wobei das polyvalente Metall ein Chelat bildet mit einer Aminopolycarbonsäure, dargestellt durch die Formel: 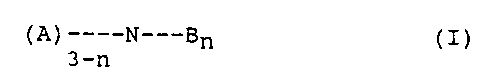 worin n zwei oder drei ist, B eine C₁-C₆ Alkylcarbonsäuregruppe ist und A eine C₁-C₆ Alkyl- oder Hydroxyalkylgruppe ist,
oder mit einer Polyaminopolycarbonsäure, dargestellt durch die Formel 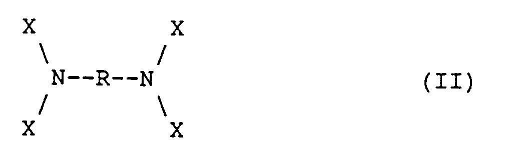 worin X eine C₁-C₆ Alkylcarbonsäuregruppe, eine C₁-C₆ Alkylgruppe, eine Hydroxyalkylgruppe oder 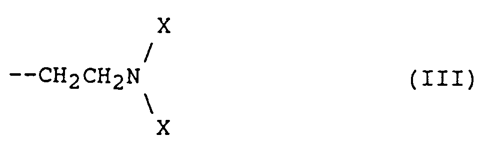 ist, worin zwei bis vier der X-Gruppen C₁-C₆ Alkylcarbonsäuregruppen sind, null bis zwei der X-Gruppen C₁-C₆ Alkylgruppen, Hydroxyalkylgruppen oder eine Gruppe gemäß Formel (III) sind, und R eine divalente organische Gruppe ist.

18. Verfahren nach Anspruch 16, wobei das polyvalente Metall ein Chelat bildet mit einer Aminopolyessigsäure (1) abgeleitet von Ammoniak oder 2-Hydroxyalkylaminen, (2) abgeleitet von Ethylendiamin, Diethylentriamin, 1,2-Propylendiamin oder 1,3-Propylendiamin oder (3) abgeleitet von Aminoessigsäurederivaten cyclischer 1,2-Diamine.

19. Verfahren nach Anspruch 18, wobei die Aminopolycarbonsäure Nitrilotriessigsäure, 2-Hydroxyethylethylendiamintetraessigsäure oder Ethylendiamintetraessigsäure ist.

20. Verfahren nach einem der vorhergehenden Ansprüche, wobei die wässrige alkalische Waschlösung ein Puffermittel enthält, ausgewählt aus Ammonium- und Alkalimetallsalzen von Carbonaten, Bicarbonaten oder Boraten und Gemischen davon.

21. Verfahren nach einem der vorhergehenden Ansprüche, wobei das Alkali Ammoniumhydroxid oder ein Alkalimetallhydroxid ist.

22. Verfahren nach einem der vorhergehenden Ansprüche, wobei mehr als ein polyvalentes Metallchelat in der wässrigen alkalischen Waschlösung vorhanden ist.

## Revendications

1. Procédé continu pour éliminer le sulfure d'hydrogène d'un courant gazeux acide consistant:
A) à mettre en contact dans une zone de contact ledit courant gazeux avec une solution aqueuse basique ayant un pH d'au moins 7 pour l'absorption du sulfure d'hydrogène sous forme d'hydrosulfure et/ou de sulfure, ladite solution comprenant également un chélate de métal polyvalent présent à l'état de valence inférieure, et éventuellement également à l'état de valence supérieure,
B) ensuite, dans une zone d'oxydation, à introduire dans la solution aqueuse basique un gaz contenant de l'oxygène afin de produire une quantité de chélate de métal à l'état de valence supérieure par oxydation du chélate de métal à l'état de valence inférieure présent, la quantité produite étant au moins la quantité stoechiométrique nécessaire pour oxyder en soufre l'hydrosulfure et/ou le sulfure présent dans la solution basique,
puis à recycler la solution basique comprenant le chélate de métal polyvalent provenant de la zone d'oxydation de l'étape B) vers la zone de contact de l'étape A), caractérisé en ce que la solution contient une base et un absorbant sélectif de H₂S et en ce que, lorsque le courant gazeux est mis en contact avec la solution aqueuse basique, tout le chélate de métal polyvalent est présent à l'état de valence inférieure ou la quantité dudit chélate de métal à l'état de valence inférieure présente est 5 fois plus grande que la quantité dudit chélate de métal à l'état de valence supérieure.

2. Procédé selon la revendication 1, dans lequel le dioxyde de carbone est éliminé dans une zone d'élimination du dioxyde de carbone située entre la zone de contact et la zone d'oxydation.

3. Procédé en continu pour éliminer le sulfure d'hydrogène d'un courant gazeux acide consistant:
à mettre en contact ledit courant gazeux avec une solution d'épuration aqueuse basique ayant un pH d'au moins 7 pour l'absorption du sulfure d'hydrogène sous forme d'hydrosulfure et/ou de sulfure, ladite solution comprenant également un chélate de métal polyvalent présent à l'état de valence inférieure, et pendant ladite mise en contact et dans la même zone, à introduire dans la solution aqueuse basique un gaz contenant de l'oxygène afin de produire une quantité de chélate de métal à l'état de valence supérieure par oxydation du chélate de métal à l'état de valence inférieure, la quantité produite étant efficace pour oxyder en soufre le sulfure d'hydrogène absorbé
caractérisé en ce que la solution contient une base et un absorbant sélectif de H₂S et en ce que la quantité dudit chélate de métal à l'état de valence inférieure présente est 5 fois plus grande que la quantité dudit chélate de métal à l'état de valence supérieure présente dans la solution.

4. Procédé selon la revendication 1 ou 3, dans lequel tout CO₂ présent est au moins partiellement éliminé par l'action d'entraînement dudit gaz contenant l'oxygène.

5. Procédé selon l'une quelconque des revendications précédentes, dans lequel l'absorbant sélectif de H₂S est un solvant physique de H₂S.

6. Procédé selon l'une quelconque des revendications précédentes, dans lequel ladite solution d'épuration contient également un absorbant sélectif de CO₂.

7. Procédé selon l'une quelconque des revendications précédentes, dans lequel l'absorbant sélectif de H₂S absorbe également sélectivement CO₂.

8. Procédé selon la revendication 7, dans lequel ledit absorbant sélectif de H₂S et de CO₂ est le N,N-diméthyl-formamide, le sulfolane, la N-méthylpyrrolidone ou le carbonate de propylène, ou l'une quelconque de leurs combinaisons.

9. Procédé selon l'une quelconque des revendications 1 à 6, dans lequel l'absorbant sélectif de H₂S est le phosphate tripotassique, le phosphate de tributyle, le dioxyde de tétra-hydrothiophène, le diméthyldithiodipropionate, la N-méthyl-2-pyrrolidone, la N-méthylmorpholine, la N-formyldiméthylmorpholine, un éther dialkylique d'un polyéthylèneglycol, ou un sel de diméthyl- ou diéthylglycérine, ou l'une quelconque de leurs combinaisons.

10. Procédé selon la revendication 6, dans lequel l'absorbant sélectif de CO₂ est le diméthylsulfoxyde, l'éther monoéthylique de diéthylèneglycol, un polyéther d'éthylène et de propylèneglycols, l'éther diméthylique de tétraéthylèneglycol, la 2,4-pentanedione, la 2,5-hexanedione, la cyclohexanone, la méthylisopropylcétone ou l'acétate de glycérine, ou l'une quelconque de leurs combinaisons.

11. Procédé selon l'une quelconque des revendications précédentes, comprenant de plus l'étape consistant à introduire une solution d'épuration aqueuse basique contenant du soufre dans une zone de récupération de soufre; à soutirer de ladite solution au moins une partie dudit soufre; puis, à recycler ladite solution traitée pour le contact avec le courant gazeux acide.

12. Procédé selon l'une quelconque des revendications précédentes, dans lequel ledit chélate de métal polyvalent représente de 5 à 50 pour-cent en poids de la solution aqueuse basique.

13. Procédé selon l'une quelconque des revendications précédentes, dans lequel la solution d'épuration aqueuse basique contient une quantité de chélate de métal polyvalent à l'état de valence supérieure de 0,1 à 10 pour-cent en volume dudit courant.

14. Procédé selon l'une quelconque des revendications précédentes, dans lequel ledit métal polyvalent dans ledit chélate est le fer, le manganèse, le cuivre, le nickel, le chrome, le cobalt, l'étain, le vanadium, le platine, le palladium ou le molybdène, ou l'une quelconque de leurs combinaisons.

15. Procédé selon la revendication 14, dans lequel le métal polyvalent est le fer.

16. Procédé selon l'une quelconque des revendications précédentes, dans lequel ledit chélate de métal polyvalent est un complexe de coordination dans lequel ledit métal polyvalent forme un chélate avec au moins l'un des acides aminocarboxylique, aminopolycarboxylique, polyaminocarboxylique ou polyaminopolycarboxylique.

17. Procédé selon la revendication 16, dans lequel le métal polyvalent est chélaté avec un acide aminopolycarboxylique représenté par la formule:
(A)₃₋ₙ----N----Bₙ (I)
dans laquelle n vaut deux ou trois; B est un groupe acide alkyl(en C₁ à C₆)carboxylique; et A est un groupe hydroxy-alkyle ou alkyle en C₁ à C₆, ou un acide polyaminopoly-carboxylique de formule 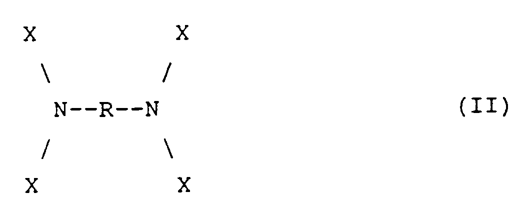 dans laquelle X est un groupe alkyl(en C₁ à C₆)carboxylique, un groupe alkyle en C₁ à C₆, un groupe hydroxyalkyle, ou 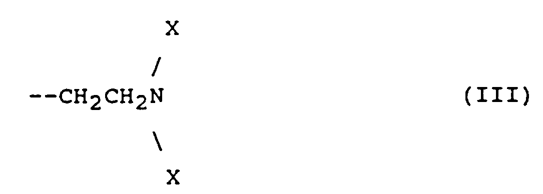 dans laquelle deux à quatre des groupes X sont des groupes acide alkyl(en C₁ à C₆)carboxylique, zéro à deux des groupes X sont des groupes alkyle en C₁ à C₆, des groupes hydroxy-alkyle, ou un groupe de formule (III), et R est un groupe organique divalent.

18. Procédé selon la revendication 16, dans lequel le métal polyvalent est chélaté avec un acide aminopolyacétique
(1) dérivé de l'ammoniac ou des 2-hydroxyalkylamines;
(2) dérivé de l'éthylènediamine, de la diéthylènetriamine, de la 1,2-propylènediamine, ou de la 1,3-propylènediamine; ou
(3) dérivé de dérivés de l'acide aminoacétique de 1,2-diamines cycliques.

19. Procédé selon la revendication 18, dans lequel ledit acide aminopolycarboxylique est l'acide nitrilotriacétique, l'acide 2-hydroxyéthyléthylènediamine tétracétique ou l'acide éthylènediamine tétracétique.

20. Procédé selon l'une quelconque des revendications précédentes, dans lequel la solution d'épuration aqueuse basique contient un agent tampon choisi parmi les carbonates, les bicarbonates ou les borates d'ammonium et alcalins et de leurs mélanges.

21. Procédé selon l'une quelconque des revendications précédentes, dans lequel ladite base est l'hydroxyde d'ammonium ou un hydroxyde alcalin.

22. Procédé selon l'une quelconque des revendications précédentes, dans lequel plus d'un chélate de métal polyvalent est présent dans ladite solution d'épuration aqueuse basique.
